(19) Europäisches Patentamt
European Patent Office
Office européen des brevets

(11) **EP 3 895 905 B1**

(12) **EUROPEAN PATENT SPECIFICATION**

(45) Date of publication and mention of the grant of the patent:
**01.05.2024 Bulletin 2024/18**

(21) Application number: **19895639.3**

(22) Date of filing: **13.12.2019**

(51) International Patent Classification (IPC):
**B60C 3/04** *(2006.01)*   **B60C 9/00** *(2006.01)*
**B60C 9/22** *(2006.01)*   **B60C 15/00** *(2006.01)*
**B60C 9/08** *(2006.01)*   **B60C 9/26** *(2006.01)*
**B60C 9/04** *(2006.01)*

(52) Cooperative Patent Classification (CPC):
**B60C 3/04; B60C 9/0007; B60C 9/08; B60C 9/22; B60C 15/0027;** B60C 2009/0425; B60C 2009/0441; B60C 2009/2238; B60C 2009/266

(86) International application number:
**PCT/JP2019/048998**

(87) International publication number:
**WO 2020/122238 (18.06.2020 Gazette 2020/25)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2018 JP 2018233858**

(43) Date of publication of application:
**20.10.2021 Bulletin 2021/42**

(73) Proprietor: **BRIDGESTONE CORPORATION**
**Chuo-ku**
**Tokyo 104-8340 (JP)**

(72) Inventors:
• **HASHIMOTO Masayuki**
**Tokyo 104-8340 (JP)**

• **SUZUKI, Kohei**
**Tokyo 104-8340 (JP)**
• **AMAMOTO, Tetsuo**
**Tokyo 104-8340 (JP)**

(74) Representative: **Marks & Clerk LLP**
**15 Fetter Lane**
**London EC4A 1BW (GB)**

(56) References cited:
WO-A1-2009/057781   BR-A- 9 611 091
JP-A- 2002 178 720   JP-A- 2002 178 720
JP-A- 2007 131 223   JP-A- 2013 199 218
JP-A- 2017 043 202   JP-A- 2017 197 153
US-A1- 2014 209 228   US-A1- 2016 082 776

**Description**

[Technical Field]

The present invention relates to a small-diameter pneumatic tire having improved load-carrying capacity.

[Background Art]

Conventionally, a pneumatic tire with a reduced diameter while increasing the load-carrying capacity (maximum load capacity) is known (see to Patent Literature 1.). According to the pneumatic tire, the space of a small vehicle can be saved and a wide riding space can be secured.

In the pneumatic tire, carcass cords made of organic fibers are used.

[Citation List]

[Patent Literature]

[Patent Literature 1] Japanese Unexamined Patent Application Publication No. 2018-138435. Attention is also drawn to the disclosures of US2014/209228, JP 2002 178720, BR 9 611 091 and US2016/082776.

[Summary of Invention]

In recent years, a new small shuttle buses have been proposed with an emphasis on the transportation of people and goods within city. Such a small shuttle bus has a total length of about 5 meters and a total width of about 2 meters, and the total vehicle weight is assumed to exceed 3 tons. For the pneumatic tire mounted on such a small shuttle bus, space saving is required while providing necessary load-carrying capacity.

When such a high load-carrying capacity is required, it is conceivable to use steel for the carcass cord, but the weight of the pneumatic tire increases and the rolling resistance deteriorates compared with the case where the carcass cord made of organic fiber is used.

In addition, since the bending rigidity of the carcass is increased when steel is used for the carcass cord, especially when the tire size is small, the folded part of the carcass folded back through the bead core is not close to the bead core, and manufacturing failure is easily caused.

Accordingly, an object of the present invention is to provide a pneumatic tire that can avoid deterioration of rolling resistance and occurrence of manufacturing failure while achieving high load-carrying capacity and space saving.

One aspect of the present invention is a pneumatic tire as claimed in claim 1.

[Brief Description of Drawings]

FIG. 1 is an overall schematic side view of a vehicle 1 to which a pneumatic tire 10 is mounted.
FIG. 2 is a cross-sectional view of the pneumatic tire 10 and a rim wheel 100.
FIG. 3 is a cross-sectional view of the sole pneumatic tire 10.
FIG. 4 is a partial perspective view of a carcass 40.
FIG. 5 is a diagram schematically showing a cross-sectional shape of a carcass cord 40 a.
FIG. 6A is a perspective view of a sole belt layer 50 during manufacturing.
FIG. 6B is a perspective view of the sole belt layer 50 after manufacturing.
FIG. 7 shows a typical tire size positioning based on a combination of a tire shape (tire outer diameter OD and tire width SW) and a rim wheel shape (rim diameter RD and rim width RW).
FIG. 8 is a diagram schematically showing a cross-sectional shape of a carcass cord 42 a according to a modified example.
FIG. 9 is a diagram schematically showing a cross-sectional shape of a carcass cord 43 a acocording to another modified example.
FIG. 10 is a cross-sectional view of a pneumatic tire 10 A according to a modified example.
FIG. 11 is a cross-sectional view of a pneumatic tire 10 B according to another modified example.

[Description of Embodiments]

Embodiments will be described below with reference to the drawings. The same functions and configurations are denoted by the same or similar reference numerals, and descriptions thereof are omitted as appropriate.

(1) Schematic configuration of vehicle to which pneumatic tire is mounted

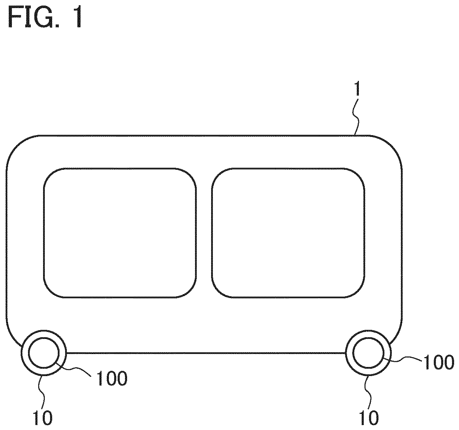

FIG. 1 is an overall schematic side view of the vehicle 1 to which the pneumatic tire 10 according to the present embodiment is mounted. As shown in FIG. 1, in this embodiment, the vehicle 1 is a four-wheel vehicle. The vehicle 1 is not limited to four wheels, but may have a six-wheel configuration or an eight-wheel configuration.

A predetermined number of pneumatic tire 10 are mounted on a vehicle 1 according to a wheel configuration. Specifically, in the vehicle 1, the pneumatic tire 10 assembled to a rim wheel 100 is mounted in a predetermined position.

The vehicle 1 belongs to a new small shuttle bus with an emphasis on transportation of people and goods in the city. In this embodiment, the new small shuttle bus is assumed to be a vehicle having a total length of 4 meters to 7 meters, a total width of about 2 meters, and a total vehicle weight of about 3 tons. However, the size and the gross vehicle weight are not necessarily limited to the range, and may be slightly out of the range.

The small shuttle bus is not necessarily limited to transportation of people, but may be used for transportation of goods, a mobile store, a mobile office, etc.

In addition, small shuttle buses have a relatively low travel speed range (maximum speed: 70 km/h or less, average speed: about 50 km/h) because they are focused on transporting people and goods within the city. Therefore, hydroplaning countermeasures need not be emphasized.

In the present embodiment, it is assumed that the vehicle 1 is an electric vehicle having an automatic driving function (assume Level 4 or higher), but the automatic driving function is not essential and the vehicle 1 may not be an electric vehicle.

If the vehicle 1 is an electric vehicle, an in-wheel motor (unillustrated) is, in an embodiment of the invention, used as a power unit. The in-wheel motor may be provided with the whole unit in the inner space of the rim wheel 100 or a part of the unit in the inner space of the rim wheel 100.

If an in-wheel motor is used, the vehicle 1, in an embodiment of the invention, has an independent steering function in which each wheel can steer independently. This makes it possible to turn and move in the lateral direction on the spot and eliminates the need for a power transmission mechanism, thereby improving the space efficiency of the vehicle 1.

Thus, in the vehicle 1, high space efficiency is required. For this reason, the pneumatic tire 10, in an embodiment of the invention, has a small diameter as small as possible.

On the other hand, a high load-carrying capacity (maximum load capacity) is required because it is mounted on the vehicle 1 having a gross vehicle weight corresponding to a vehicle size and an application.

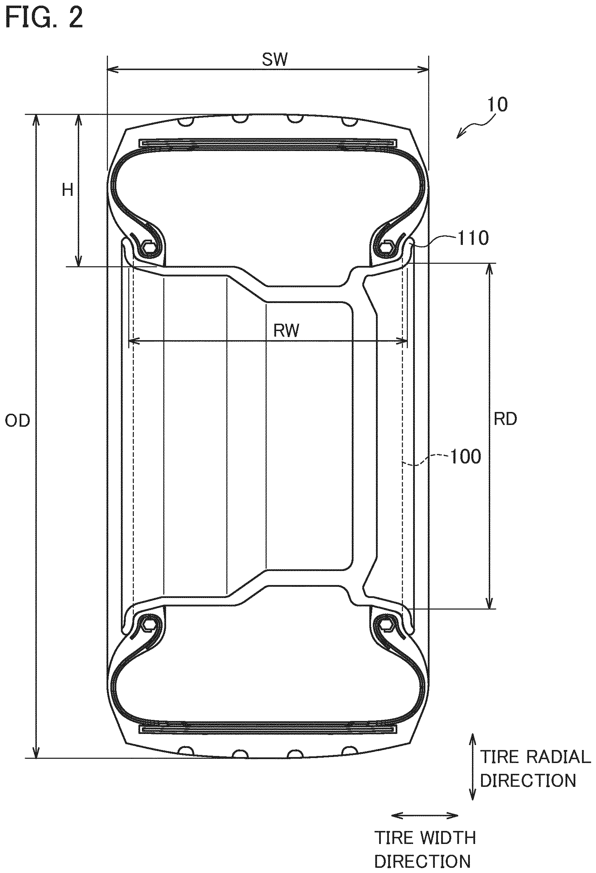

In order to satisfy such requirements, the pneumatic tire 10 has a load-carrying capacity corresponding to the total vehicle weight of the vehicle 1 while reducing the tire outer diameter OD (not shown in FIG. 1, see FIG. 2).

If the vehicle 1 has an in-wheel motor and an independent steering function, the pneumatic tire 10 is, in an embodiment of the invention, low in aspect ratio from the viewpoint of improving responsiveness, and the rim diameter RD (not shown in FIG. 1, see FIG. 2) of the pneumatic tire 10 is, in an embodiment of the invention, large in consideration of a housing space for an in-wheel motor or the like.

(2) Configuration of pneumatic tire

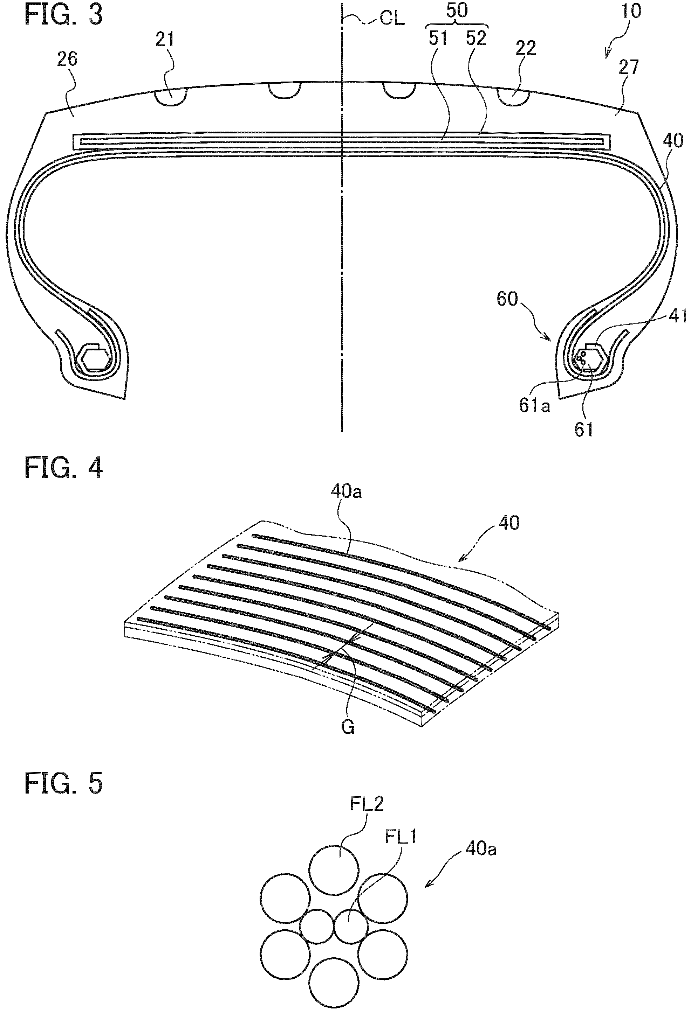

FIG. 2 is a cross-sectional view of the pneumatic tire 10 and the rim wheel 100. Specifically, FIG. 2 is a cross-sectional view along the tire width direction and the tire radial direction of a pneumatic tire 10 assembled to a rim wheel 100. In FIG. 2, the sectional hatching is not shown (the same as FIG. 3 and beyond).

The pneumatic tire 10 has a relatively small diameter while being wide. Specifically, the rim diameter RD of the rim wheel 100 is, in an embodiment of the invention, 12 inches or more and 17.5 inches or less. However, the rim diameter RD may be 10 inches or more and 22 inches or less if it satisfies another numerical range.

As shown in FIG. 2, the rim diameter RD is the outer diameter of the rim body portion of the rim wheel 100 and does not include the portion of the rim flange 110.

The tire width SW of the pneumatic tire 10 is, in an embodiment of the invention, 125 mm or more and 255 mm or less. As shown in FIG. 2, the tire width SW means a cross-sectional width of the pneumatic tire 10, and when the pneumatic tire 10 includes a rim guard (unillustrated), the rim guard portion is not included.

The aspect ratio of the pneumatic tire 10 is, in an embodiment of the invention, 35% or more and 75% or less. The Aspect ratio is calculated using expression 1.

Aspect ratio (%) = tire section geight H/tire width SW (section width) x 100         (Expression 1)

The tire outer diameter OD of the pneumatic tire 10 is 350 mm or more and 600 mm or less. The tire outer diameter OD is, in an embodiment of the invention, 500 mm or less.

When the tire outer diameter OD is such a size and the rim width RW is defined by the rim width of the rim wheel 100 assembled to the pneumatic tire 10 is, the pneumatic tire 10 satisfies the relationship of (Expression 2) and (Expression 3).

$$0.78 \leq \mathrm{RW/SW} \leq 0.99 \ ... \ (\mathrm{Expression} \ 2)$$

$$0.56 \leq \mathrm{RD/OD} \leq 0.75 \ ... \ (\mathrm{Expression} \ 3)$$

The pneumatic tire 10, in an embodiment of the invention, satisfies $0.78 \leqq$ RW/SW $\leqq 0.98$, and, in an embodiment of the invention, $0.78 \leqq$ RW/SW $\leqq 0.95$. The pneumatic tire 10, in an embodiment of the invention, satisfies $0.56 \leq$ RD/OD $\leq 0.72$, and, in an embodiment of the invention, $0.56 \leq$ RD/OD $\leq 0.71$.

The pneumatic tire 10 satisfying such a relationship can ensure an air volume necessary for supporting the gross vehicle weight of the vehicle 1 while having a small diameter. Specifically, an air volume of 20,000 cm$^3$ or more is required in consideration of load bearing performance. In addition, in order to save space, it is required to be 80,000 cm$^3$ or less.

If the above relationship is satisfied, the rim width RW is not particularly limited, but is, in an embodiment of the invention, as wide as possible from the viewpoint of securing the air volume. For example, the rim width may be 3.8 to 7.8 J.

Also, from the viewpoint of securing the air volume, it is preferable that the ratio of the rim diameter RD to the tire outer diameter OD is small, that is, the aspect ratio is high. However, as described above, it is preferable that the aspect ratio is low from the viewpoint of responsiveness, and it is preferable that the rim diameter RD is large in consideration of the housing space such as the in-wheel motor, so that the aspect ratio and the rim diameter RD have a trade-off relationship between the air volume and the responsiveness as well as the housing space such as the in-wheel motor.

One example of a suitable size for the pneumatic tire 10 is 205/40 R 15. The suitable rim width is approximately 7.5 J. Other examples of suitable sizes include 215/45 R 12. In this case, the suitable rim width is approximately 7.0 J.

In addition, although not particularly limited, a set internal pressure (normal pressure) of the pneumatic tire 10 is assumed to be 400 to 1,100 kPa, more realistically 500 ~ 900 kPa. The normal internal pressure is, for example, the air pressure corresponding to the maximum load capacity in the YearBook of JATMA (Japan Automobile Tire Manufacturers Association) in Japan, ETRTO in Europe, TRA in the United States, and other tire standards in each country.

In addition, the load to be borne by the pneumatic tire 10 is assumed to be 500 to 1,500 kgf, and practically, about 900 kgf.

FIG. 3 is a sectional view of the sole pneumatic tire 10. Specifically, FIG. 3 is a cross-sectional view of pneumatic tire 10 taken along the tire width direction and the tire radial direction.

As shown in FIG. 3, the pneumatic tire 10 includes a tread 20, a tire side portion 30, a carcass 40, a belt layer 50 and a bead portion 60.

The tread 20 is a portion in contact with the road surface. On the tread 20, a pattern (unillustrated) corresponding to the use environment of the pneumatic tire 10 and the type of vehicle to be mounted is formed.

The tire side portion 30 is continuous with the tread 20 and positioned inside the tire radial direction of the tread 20. The tire side portion 30 is an area from the tire width direction outer end of the tread 20 to the upper end of the bead portion 60. The tire side portion 30 is sometimes referred to as a sidewall.

The carcass 40 is an annular member that forms a tire skeleton of the pneumatic tire 10. The carcass 40 has a radial structure in which a carcass cord 40 a (not shown in FIG. 3, see FIG. 4) arranged radially along the tire radial direction is covered with a rubber material.

The belt layer 50 is provided inside the tire radial direction of the tread 20. The belt layer 50 comprises a core belt 51 and a sheath belt 52.

The core belt 51 is provided from one shoulder portion 26 of the tread 20 to the other shoulder portion 27 of the tread 20. The shoulder portion 26 is an area outside the tire width direction than a circumferential main groove 21, and the shoulder portion 27 is an area outside the tire width direction than a circumferential main groove 22. That is, the shoulder portion 26 and the shoulder portion 27 are areas outside the tire width direction than the circumferential main groove formed at the outermost tire width direction.

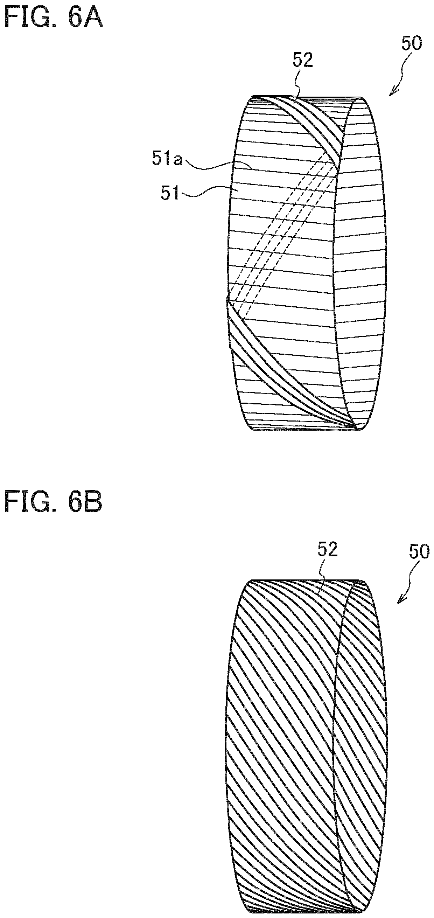

The core belt 51 is a belt formed by rubber coating a belt cord 51 a (not shown in FIG. 3, see FIG. 6A) inclined at a low angle with respect to the tire width direction. The sheath belt 52 is a tape-shaped belt including a cord and is wound over the entire circumference of the core belt 51. The sheath belt 52 provides similar functionality to a crossing belt layer. The configuration of the belt layer 50 will be described later.

The bead portion 60 continues to tire side portion 30 and is positioned inside in tire radial direction of tire side portion 30. The bead portion 60 is locked to a rim wheel 100 and has an annular bead core 61. The carcass 40 is folded back to the outside of the tire width direction via a bead core 61.

The bead core 61 is formed by twisting a plurality of bead wires 61 a (in FIG. 3, only a part is shown.). In this manner, the cross-sectional shape of the bead core 61 formed by the bead wire 61 a may be hexagonal, square, or circular.

The width of the bead core 61 along the tire width direction is, in an embodiment of the invention, 5 mm or more and 30 mm or less. The height of the bead core 61 along the tire radial direction is, in an embodiment of the invention, 3 mm or more and 15 mm or less. Further, the number (number of lines in cross section) of the bead wires 61 a forming the bead core 61 is, in an embodiment of the invention, 15 to 60.

A folded end portion 41 of the carcass 40 folded in the bead portion 60 is provided so as to be wound along the bead core 61. The folded end portion 41 is in contact with the tire radial direction outer end of the bead core 61. Specifically, at the folded end portion 41 of the carcass 40, the carcass cord 40 a is wound around the outer end in the tire radial direction of the bead core 61.

The bead portion 60 may be provided with a bead filler outside the tire radial direction of the bead core, or may be provided with a chafer for preventing the carcass 40 or the like folded by the bead portion 60 from being rubbed and worn by the rim wheel 100.

(3) Configuration of the carcass

Next, the configuration of the carcass 40 will be described. FIG. 4 is a partial perspective view of the carcass 40. As shown in FIG. 4, the carcass 40 has the carcass cord 40 a disposed along the tire width direction.

Specifically, the plurality of carcass cords 40 a disposed along the tire width direction are covered with a rubber material.

The carcass cord 40 a is formed by twisting a metal filament. Specifically, the carcass cord 40 a is formed of a steel filament.

FIG. 5 schematically shows a cross-sectional shape of the carcass cord 40 a. As shown in FIG. 5, the carcass cord 40 a is formed by twisting a plurality of filaments FL1 and a plurality of filaments FL2. Specifically, the carcass cord 40 a is formed by two filaments FL1 and six filaments FL2.

The carcass cord 40 a has an outer diameter smaller than that of a general carcass cord so as to easily follow the shape of the bead portion 60 of the pneumatic tire 10 having a small diameter. Specifically, the outer diameter of the carcass cord 40 a is 0.7 mm or less. The outer diameter of the carcass cord 40 a is, in an embodiment of the invention, 0.6 mm or less.

The outer diameters of the filaments FL1 and FL2 forming the carcass cord 40 a are, in an embodiment of the invention, 0.2 mm or less.

In this embodiment of the invention, the outer diameter of the filament FL1 is 0.15 mm and the outer diameter of the filament FL2 is 0.175 mm.

The distance G (see Fig. 4) between adjacent carcass cords 40 a is 4.0 mm or less. Specifically, the distance G is a distance between outer peripheral surfaces of adjacent carcass cords 40 a in the tire circumferential direction.

The distance G is more, in an embodiment of the invention, 3.5 mm or less, and more, in an embodiment of the invention, 3.0 mm or less. The distance G is, in an embodiment of the invention, 0.5 mm or more, more, in an embodiment of the invention, 1.0 mm or more, and, in an embodiment of the invention, 1.5 mm or more. The distance G is a distance between adjacent carcass cords 40 a immediately below the tire equatorial line CL (see Fig. 3).

(4) Belt layer Configuration

Next, the configuration of the belt layer 50 will be described. As described above, the belt layer 50 comprises the core belt 51 and the sheath belt 52.

FIGs. 6A and 6B illustrate a configuration of the belt layer 50. Specifically, FIG. 6A is a perspective view of the belt layer 50 during manufacturing, and FIG. 6B is a perspective view of the belt layer 50 after manufacturing.

As shown in FIG. 6A, the core belt 51 has a belt cord 51 a disposed along the tire width direction. The core belt 51 is an annular belt formed by coating a plurality of belt cords 51 a with rubber.

As shown in FIG. 6A, the belt cord 51 a is, in an embodiment of the invention, slightly inclined with respect to the tire width direction. Specifically, the belt cord 51 a is, in an embodiment of the invention, inclined in the same direction as the inclination direction of the sheath belt 52 (up left in FIG. 6A).

The sheath belt 52 is a tape-like belt having a width of about 1 cm, and is spirally wound around the core belt 51 along the tire circumferential direction. Specifically, the sheath belt 52 is spirally wound around the core belt 51 along the tire circumferential direction at a predetermined distance equal to or greater than the width of the sheath belt 52.

The sheath belt 52 covers the tire radial direction outer surface of the core belt 51 and the tire radial direction inner surface of the core belt 51 by being wound around a plurality of laps in the tire circumferential direction so as not to overlap the adjacent sheath belt 52.

A longitudinal end (unillustrated) of the sheath belt 52 having a tape shape is wound around the core belt 51 so as not to be positioned in the shoulder portions 26, 27 and the center region (immediately below the tire equatorial line).

As shown in FIG. 6B, the sheath belt 52 is wound around the entire circumference of the annular core belt 51.

In this embodiment, the belt layer 50 comprises only the core belt 51 and the sheath belt 52. As noted above, the belt layer 50 provides similar functionality to the crossing belt layer, but in this embodiment, no additional belts, such as a reinforcing belt, are provided in addition to the core belt 51 and the sheath belt 52.

The number of driving of the belt cords 51 a in the core belt 51 is, in an embodiment of the invention, 15/50 mm or more and 30/50 mm or less. The number of cords in the sheath belt 52 is, in an embodiment of the invention, 10/50 mm or more and 25/50 mm or less. The number of the belt cords 51 a to be driven is, in an embodiment of the invention, larger (that is, dense) than the number of cords to be driven in the sheath belt 52.

The angle between the belt cord 51 a and the tire width direction is, in an embodiment of the invention, not less than 20 degrees and not more than 60 degrees. The angle formed by the cord of the sheath belt 52 with the tire width direction is, in an embodiment of the invention, 50 degrees or more and 80 degrees or less. The angle formed by the cord of the sheath belt 52 with the tire width direction is, in an embodiment of the invention, larger than the angle formed by the belt cord 51 a with the tire width direction.

The number of turns of the sheath belt 52 in the tire circumferential direction is, in an embodiment of the invention, 3 times or more and 6 times or less in consideration of securing performance and productivity.

(5) Function and effects

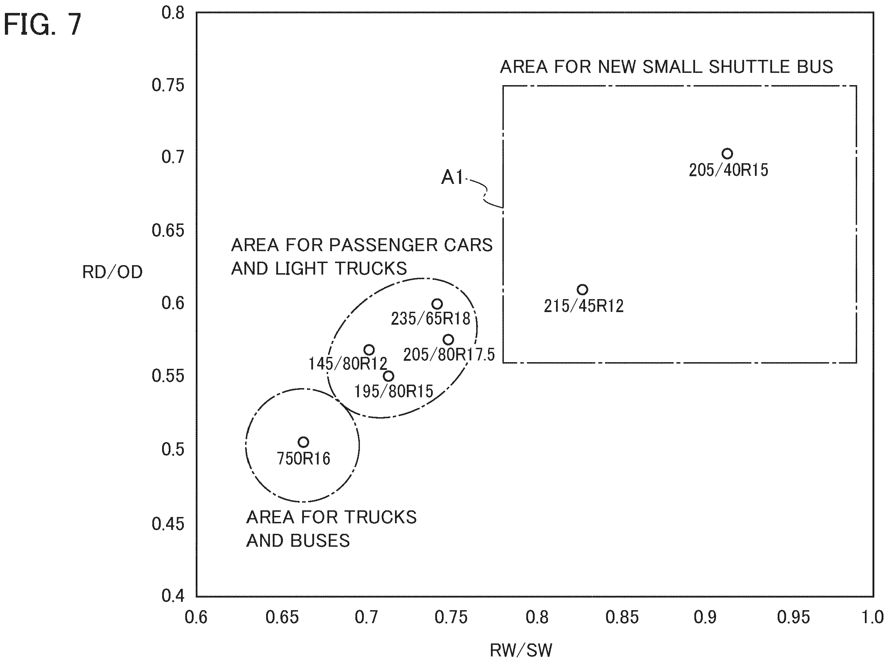

Next, the function and effects of the pneumatic tire 10 will be described. FIG. 7 shows a typical tire size positioning based on a combination of a tire shape (tire outer diameter OD and tire width SW) and a rim wheel shape (rim diameter RD and rim width RW).

Specifically, the horizontal axis of the graph shown in FIG. 7 shows the ratio (RW/SW) of the rim width RW to the tire width SW, and the vertical axis shows the ratio (RD/OD) of the rim diameter RD to the tire outer diameter OD. In FIG. 7, typical tire size positions are plotted according to the values of RW/SW and RD/OD.

As shown in FIG. 7, the area of the track bus tire is low in both RW/SW and RD/OD. The area of tire for passenger cars or light trucks is higher than that of tire for trucks and buses for both RW/SW and RD/OD.

An example of a suitable size for the pneumatic tire 10 described above, 215/45 R 12, is included in area A1. As described above, the area A1 corresponds to $0.78 \leqq RW/SW \leqq 0.99$, and $0.56 \leqq RD/OD \leqq 0.75$. Such an area A1 is positioned as an area of the tire for the new small shuttle bus with an emphasis on transportation of people, goods and the like in the city, as in the aforementioned vehicle 1.

The RD/OD in the area of the tire for the new small shuttle bus is not significantly different from, and some overlap with, the RD/OD in the area of the tire for the passenger cars or light trucks. On the other hand, the RW/SW in the area of the tire for the new small shuttle bus is higher than the RW/SW in the area of the tire for passenger cars or light trucks.

As described above, the outer diameter OD of the pneumatic tire 10 is 350 mm or more and 600 mm or less. Therefore, the diameter is sufficiently small in comparison with the size of the vehicle 1, and can contribute to space saving of the vehicle 1.

Further, according to the pneumatic tire 10 having the size included in the area A1, since the relationship of $0.78 = RW/SW = 0.99$ is satisfied, a wide rim width RW with respect to the tire width SW can be configured, that is, a wide tire can be configured, and it is easy to secure an air volume necessary for exhibiting high load capacity. If the rim width RW becomes too wide, the tire width SW also widens and space efficiency decreases, and the bead portion 60 tends to come off the rim wheel 100.

Further, according to the pneumatic tire 10 having the size included in the area A1, since the relationship of $0.56 \leqq RD/OD \leqq 0.75$ is satisfied, the rim diameter RD with respect to the tire outer diameter OD is large, and it is easy to secure a housing space for an in-wheel motor or the like. When the rim diameter RD becomes too small, the diameter size of the disc brake or the drum brake becomes small. Therefore, the contact area of the effective brake becomes small, and it becomes difficult to secure the required braking performance.

That is, according to the pneumatic tire 10, when it is mounted on the new small shuttle bus or the like, it is possible to achieve a high space efficiency while having a higher load-carrying capacity.

The rim diameter RD of the pneumatic tire 10 is, in an embodiment of the invention, 12 inches or more and 17.5 inches or less. Thus, a necessary and sufficient air volume and a housing space for an in-wheel motor can be secured while maintaining a small diameter. Also, braking performance and traction performance can be secured.

The tire width SW of the pneumatic tire 10 is, in an embodiment of the invention, 125 mm or more and 255 mm or less. The aspect ratio of the pneumatic tire 10 is, in an embodiment of the invention, 35% or more and 75% or less. Thus, a necessary and sufficient air volume and a housing space for an in-wheel motor can be secured.

Further, in this embodiment of the invention, as described above, the carcass cord 40 a is formed of the filament FL1 and the filament FL2 made of steel.

Since the carcass cord 40 a is formed of a steel filament in this manner, durability can be secured while having load-carrying capacity.

Since the filament FL1 and the filament FL2 are thinner than tire (e.g. small diameter tire 225/80 R 17.5 for trucks and buses) of a similar size, the carcass cord 40 a easily follows the shape of the small-diameter bead portion 60 even when the steel filament is used. In particular, even when the radius of curvature of the folded portion of the carcass 40 at the bead core 61 is small, the carcass 40 is easily folded back to the outside of the tire width direction via the bead core 61, so that it is effective in preventing manufacturing failure.

Furthermore, since the distance G between the adjacent carcass cords 40 a is set to 4.0 mm or less while using such thin steel filaments, even if the pneumatic tire 10 assembled to the rim wheel 100 is filled with air (gas), the carcass cords 40 a can be prevented from being in a state of floating on the outer surface of the bead portion 60 (side irregularity).

Further, since the constant distance G is secured, the weight increase of the carcass 40 can be suppressed even when the filament made of steel is used, so that the deterioration of rolling resistance can also be suppressed.

That is, according to the pneumatic tire 10, while achieving load-carrying capacity and space saving, deterioration of rolling resistance and occurrence of manufacturing failure can be avoided.

In this embodiment, the outer diameters of the filaments FL1 and FL2 are 0.2 mm or less. Therefore, the carcass 40 can more easily follow the shape of the small-diameter bead portion 60, and the weight increase can be suppressed. Thus, the deterioration of rolling resistance and the occurrence of manufacturing failure can be more surely avoided.

In the present embodiment, at the folded end portion 41 of the carcass 40, the carcass 40, specifically, the carcass cord 40 a is wound around the outer end in the tire radial direction of the bead core 61. Therefore, a state in which the carcass cord 40 a floats on the outer surface of the bead portion 60 (side irregularity) can be more reliably prevented. Further, crack propagation at the end of the carcass cord 40 a can be suppressed.

(6) Other embodiments

Although the contents of the present invention have been described above with reference to the examples, it will be obvious to those skilled in the art that the present invention is not limited to these descriptions and that various modifications and improvements are possible, within the scope of the claims.

For example, in the embodiment described above, the carcass cord 40 a is formed by twisting the filaments FL1 and FL2 (see FIG. 5), but the carcass cord 40 a may be formed as follows.

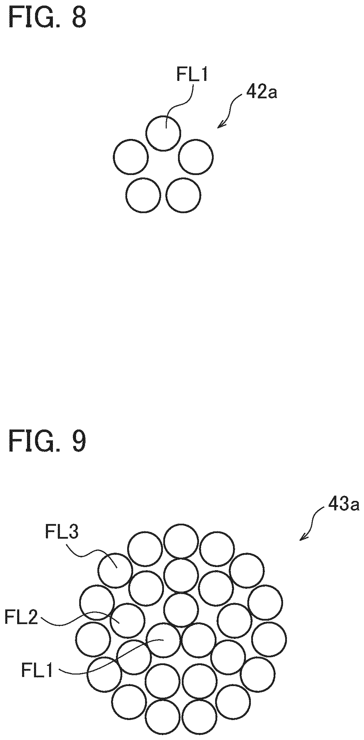

FIG. 8 is a diagram schematically showing a sectional shape of a carcass cord 42 a according to a modified example. FIG. 9 is a diagram schematically showing a cross-sectional shape of a carcass cord 43 a according to another modified example.

As shown in FIG. 8, the carcass cord 42 a is formed by only one kind of filament FL1. As shown in FIG. 9, the carcass cord 43 a is formed by three kinds of filaments, specifically, the filament FL1, the filament FL2 and a filament FL3.

That is, the carcass cord may be formed by a single (type) filament or may be formed by a plurality of filaments.

As in the above embodiment, the outer diameters of the filament FL1, the filament FL2 and the filament FL3 are, in an embodiment of the invention, 0.2 mm or less. The outer diameters of the filament FL1, the filament FL2 and the filament FL3 are, in an embodiment of the invention, 0.175 mm or less, in an embodiment of the invention, 0.150 mm or less.

In the above-described embodiment, the pneumatic tire 10 satisfies the relationship $0.56 \leqq RD/OD \leqq 0.75$, but the relationship may not always be satisfied.

In the above-described embodiment, the carcass cord 40 a is wound around the outer end in the tire radial direction of the bead core 61, but such a configuration is not necessarily required.

Further, although the belt layer 50 comprising the core belt 51 and the sheath belt 52 was used in the above-described embodiment, the belt layer 50 may have the following shape.

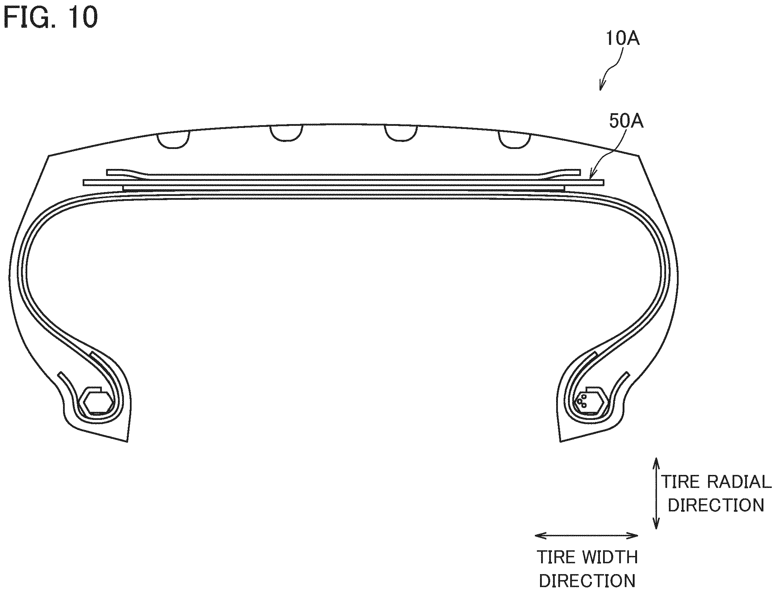

FIG. 10 is a cross-sectional view of a pneumatic tire 10 A according to a modified example. As shown in FIG. 10, the pneumatic tire 10 A provided in the belt layer 50 includes a pair of crossing belts having crossing cords. The configuration of the belt layer 50 is generally similar to that of an ordinary tire belt layer for trucks and buses.

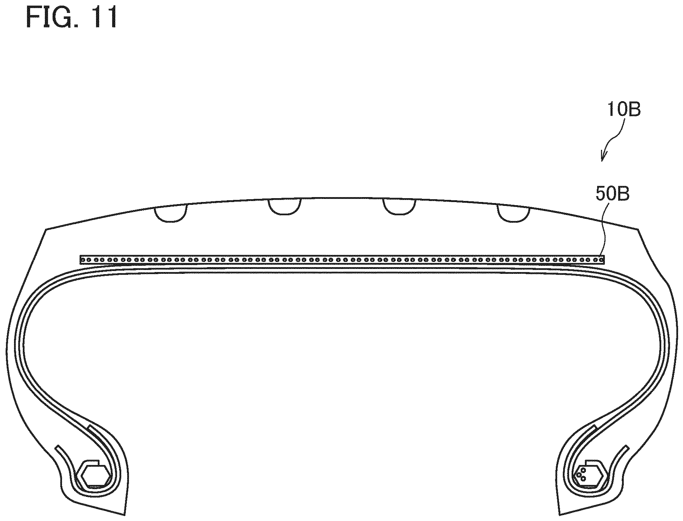

FIG. 11 is a cross-sectional view of a pneumatic tire 10 B according to another modified example. As shown in FIG. 11, the belt layer 50 B prpvided in the pneumatic tire 10 B is a spiral belt formed by winding a resin coated cord coated with a resin material along the tire circumferential direction.

Like the pneumatic tire 10 A and the pneumatic tire 10 B, the configuration of the belt layer and the shape of the folded end portion 41 of the carcass 40 may be appropriately changed in accordance with the characteristics of the vehicle 1.

Embodiments of the invention have been described as above.

[Reference Signs List]

1 Vehicle
10 , 10 A , 10 B Pneumatic tire
20 Tread
21, 22 Circumferential main grooves
26, 27 Shoulder portions
30 Tire side portion
40 Carcass
40 a, 42 a, 43 a Carcass cords
41 folded end portion
50 , 50 A , 50 B Belt layers
51 Core belt
51 a belt cord
52 Sheath belt
60 Bead portion
61 Bead core
61 a Bead wire
100 Rim wheel
110 Rim flange
FL1, FL2, FL3 filaments

**Claims**

1. A pneumatic tire (10, 10A, 10B) having an annular carcass (40) forming a tire skeleton, the tire being mounted on a vehicle (1), wherein

   an outer diameter of the pneumatic tire is 350 mm or more and 600 mm or less,
   as RW is defined by a rim width of a rim wheel (100) assembled to the pneumatic tire and SW is defined by a tire width of the pneumatic tire, the relation of $0.78 \leq RW/SW \leq 0.99$ is satisfied, wherein
   the carcass has a carcass cord (40a, 42a, 43a) disposed along a tire width direction,
   the carcass cord is formed of a filament of steel (FL1, FL2),
   an outer diameter of the carcass cord is 0.7 mm or less, and
   a distance between the adjacent carcass cords is 4.0 mm or less.

2. The pneumatic tire according to claim 1, wherein OD is defined by an outer diameter of the pneumatic tire and RD is defined by a rim diameter of the pneumatic tire, the relation of $0.56 \leq RD/OD \leq 0.75$ is satisfied.

3. The pneumatic tire according to claim 1, wherein an outer diameter of the filament is 0.2 mm or less.

4. The pneumatic tire according to any one of claims 1 to 3, comprising

   a bead portion (60) locked to a rim wheel and having an annular bead core (61), wherein
   the carcass is folded back outward of the tire width direction via the bead core, and
   the carcass cord is wound around an outer end in a tire radial direction of the bead core at a folded end (41) of the carcass.

**Patentansprüche**

1.  Luftreifen (10, 10A, 10B), der eine ringförmige Karkasse (40) aufweist, die ein Reifenskelett bildet, wobei der Reifen an einem Fahrzeug (1) angebracht ist, wobei

    ein Außendurchmesser des Luftreifens 350 mm oder mehr und 600 mm oder weniger beträgt,
    wenn RW durch eine Felgenbreite eines Felgenrades (100), das an dem Luftreifen montiert ist, definiert wird und SW durch eine Reifenbreite des Luftreifens definiert wird, die Beziehung von 0,78 ≤ RW/SW ≤ 0,99 erfüllt ist, wobei
    die Karkasse einen Karkassenkord (40a, 42a, 43a) aufweist, der entlang einer Reifenbreitenrichtung angeordnet ist,
    der Karkassenkord aus einem Faden aus Stahl (FL1, FL2) geformt ist,
    ein Außendurchmesser des Karkassenkords 0,7 mm oder weniger beträgt und
    ein Abstand zwischen den benachbarten Karkassenkords 4,0 mm oder weniger beträgt.

2.  Luftreifen nach Anspruch 1, wobei, wenn OD durch einen Außendurchmesser des Luftreifens definiert wird und RD durch einen Felgendurchmesser des Luftreifens definiert wird, die Beziehung von 0,56 ≤ RD/OD ≤ 0,75 erfüllt ist.

3.  Luftreifen nach Anspruch 1, wobei ein Außendurchmesser des Fadens 0,2 mm oder weniger beträgt.

4.  Luftreifen nach einem der Ansprüche 1 bis 3, der Folgendes umfasst:

    einen Wulstabschnitt (60), der an einem Felgenrad arretiert ist und einen ringförmigen Wulstkern (61) aufweist, wobei
    die Karkasse über den Wulstkern in der Reifenbreitenrichtung nach außen zurückgeschlagen ist und
    der Karkassenkord an einem umgeschlagenen Ende (41) der Karkasse um ein in einer Reifenradialrichtung äußeres Ende des Wulstkerns gewunden ist.


**Revendications**

1.  Bandage pneumatique (10, 10A, 10B) comportant une carcasse annulaire (40) formant un squelette de bandage, le bandage étant monté sur un véhicule (1), dans lequel

    un diamètre extérieur du bandage pneumatique correspond à 350 mm ou plus et à 600 mm ou moins ;
    comme RW est définie par une largeur de jante d'une roue à jante (100) assemblée sur le bandage pneumatique, et SW est définie par une largeur de bandage du bandage pneumatique, la relation de 0,78 ≤ RW/SW ≤ 0,99 est satisfaite, dans lequel
    la carcasse comporte un câblé de carcasse (40a, 42a, 43a) disposé le long d'une direction de la largeur du bandage ;
    le câblé de carcasse est formé à partir d'un filament d'acier (FL1, FL2) ;
    un diamètre extérieur du câblé de carcasse correspond à 0,7 mm ou moins ; et
    une distance entre les câblés de carcasse adjacents correspond à 0,4 mm ou moins.

2.  Bandage pneumatique selon la revendication 1, dans lequel OD est défini par un diamètre extérieur du bandage pneumatique et RD est défini par un diamètre de jante du bandage pneumatique, la relation de 0,56 ≤ RD/OD ≤ 0,75 étant satisfaite.

3.  Bandage pneumatique selon la revendication 1, dans lequel un diamètre extérieur du filament correspond à 0,2 mm ou moins.

4.  Bandage pneumatique selon l'une quelconque des revendications 1 à 3, comprenant :
    une partie de talon (60) verrouillée sur une roue à jante et comportant une tringle annulaire (61), dans lequel :

    la carcasse est repliée vers l'extérieur dans la direction de la largeur du bandage via la tringle ; et
    le câblé de carcasse est enroulé autour d'une extrémité externe, dans une direction radiale du bandage, de la tringle, au niveau d'une extrémité pliée (41) de la carcasse.

FIG. 1

FIG. 2

TIRE RADIAL
DIRECTION

TIRE WIDTH
DIRECTION

FIG. 3

FIG. 4

FIG. 5

## FIG. 6A

## FIG. 6B

FIG. 7

AREA FOR NEW SMALL SHUTTLE BUS

205/40R15

215/45R12

A1

AREA FOR PASSENGER CARS AND LIGHT TRUCKS

235/65R18

205/80R17.5

145/80R12

195/80R15

750R16

AREA FOR TRUCKS AND BUSES

RD/OD

RW/SW

14

FIG. 8

FL1

42a

FIG. 9

43a

FL3

FL2

FL1

FIG. 10

TIRE RADIAL DIRECTION

TIRE WIDTH DIRECTION

EP 3 895 905 B1

FIG. 11

10B

50B

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018138435 A
- US 2014209228 A
- JP 2002178720 A
- BR 9611091
- US 2016082776 A